# EUROPÄISCHE PATENTSCHRIFT

(11) **EP 1 153 890 B1**
(45) Veröffentlichungstag und Bekanntmachung des Hinweises auf die Patenterteilung: **17.03.2004**
(21) Anmeldenummer: 01111048.3
(22) Anmeldetag: 08.05.2001
(51) Int. Cl.: C02F 1/78, G01N 33/00, G01N 33/18

(54) **Verfahren zur Aufbereitung von Badewasser**
Method and plant for treating bathing water
Procédé et installation de traitement des eaux de baignade

(30) Priorität: 08.05.2000 DE 10022093
(43) Veröffentlichungstag der Anmeldung: 14.11.2001
(73) Patentinhaber: Dinotec GmbH Wassertechnologie und Schwimmbadtechnik, 63477 Maintal (DE)
(72) Erfinder: Schminke, Dieter., 60598 Frankfurt am Main (DE)
(74) Vertreter: KEIL & SCHAAFHAUSEN

(56) Entgegenhaltungen:
- EP-A- 0 480 779
- DE-A- 3 830 999
- DE-A- 4 445 689
- DE-A- 19 645 548
- GB-A- 2 306 463
- PATENT ABSTRACTS OF JAPAN vol. 1999, no. 01, 29. Januar 1999 (1999-01-29) -& JP 10 263564 A (SUMITOMO PRECISION PROD CO LTD), 6. Oktober 1998 (1998-10-06)

## Beschreibung

Die Erfindung betrifft ein Verfahren zur Aufbereitung von Badewasser nach dem Oberbegriff des Anspruchs 1.

Durch die Ozonierung von Badewasser können organische Substanzen, Bakterien etc. weitestgehend zu nicht relevanten Verbindungen, teilweise bis hin zu Nitrat und Kohlendioxid aufoxidiert werden. Sie erscheinen somit nicht mehr als Negativparameter bei der Qualitätsbetrachtung des Badewassers.

Bei der Ozon-Desinfektion von Schwimmbadwasser wird das Ozon dem umgewälzten Hauptstrom des Wassers mit einer Konzentration von ca. 1 bis 1,2 g/m³ zugesetzt und durch eine Reaktionsstrecke mit einer definierten Reaktionszeit geführt. An die Reaktionsstrecke schließt sich eine automatische Entlüftungsanlage zur Abführung von gasförmigem Restozon und Ballastluft an. Das Ozon wird hierbei in einem Aktivkohlefilter absorbiert, so dass die austretende Luft frei von Ozon ist. Das restliche, in Wasser gelöste Ozon, das nicht mit organischen Substanzen in Reaktion getreten ist oder anderweitig abgebaut wurde, wird durch eine Aktivkornkohlefilteranlage beseitigt, damit das dem Schwimmbad zugeführte Wasser frei von Ozon ist. In einer üblicherweise photometrisch durchgeführten Kontrollmessung wird sichergestellt, dass der Ozongehalt unterhalb von 0,05 mg/l liegt. Durch die Aktivkohlefiltration wird aber zwangsläufig das in dem aus dem Schwimmbecken zurückkommenden Badewasser vorhandene Restchlor in Chlorid umgewandelt. Die Chloridbildung ist umso größer, je größer die Umwälzleistung des Bades ist, d.h. je häufiger das Badewasser über die Filtration geführt wird. Die mit der Aktivkohlefiltration verbundene Chloridbildung ist unerwünscht, da der Chloridgehalt im Badewasser gemäß Trinkwasserverordnung (TVO) 250 mg/l nicht übersteigen sollte. Bei höheren Chloridgehalten sind Edelstähle und stahlarmierte, geflieste Betonbecken nur eingeschränkt nutzbar, da das Chlorid zu Korrosionserscheinungen führt. Darüber hinaus bilden sich durch spritzendes Badewasser Aerosole, die in Entlüftungskanäle aus verzinkten Stahl gelangen und dort zu Korrosion führen. Der Chloridgehalt kann bei derartigen Anlagen nur in den geforderten Grenzen gehalten werden, indem die Frischwasserzugabe erhöht wird. Dies führt jedoch durch die Wasserzuführung und die notwendige Aufheizung des Wassers zu enormen Kostensteigerungen.

Das gebräuchlichste Verfahren zur Aufbereitung von Schwimm- und Badebeckenwasser, wie es in der DIN 19643 normiert ist, ist nicht auf die Ozonbehandlung des Wassers ausgelegt, sondern arbeitet nach der Verfahrenskombination Flockung, Filterung, Chlorung. Verfahrensbedingt werden hierbei echt gelöste organische Stoffe nicht über die Filtration entfernt und können mit Chlor zu Chlorstickstoffverbindungen (gebundenes Chlor) und Trihalogenmethanen (chlorsubstituierte Methane) reagieren. Diese Reaktion ist unerwünscht und wird im Falle der Überschreitung von bestimmten Grenzwerten (gebundenes Chlor > 0,2 mg/l, Trihalogenmethane > 20 µg/l) durch die Zudosierung von ca. 0,5 - 2 g wässriger Pulveraktivkohlesuspension zum unfiltrierten Wasser reduziert. Die Zugabe erfolgt vor der Filteranlage, so dass sich die Aktivkohle in der Filteranlage anreichert. Auch bei diesem Verfahren wird das im zurückkommenden Badewasser vorhandene Restchlor weitestgehend abgebaut und in Chlorid umgewandelt, so dass sich die oben beschriebenen Nachteile ergeben.

Anstelle der Zudosierung von in Wasser suspendierter Pulveraktivkohle kann, je nach technischer Ausführung des Bades, auch eine in die Filteranlage integrierte absorbierende Kohleschicht vorgesehen sein. Der erzielte Effekt wäre prinzipiell etwa der gleiche wie beim Zudosieren von Pulveraktivkohle.

Die Anwendung der eingangs beschriebenen Ozonierung ist jedoch nicht ohne weiteres möglich, da die gesamte Badewassertechnik, insbesondere die verwendeten Werkstoffe hierauf abgestimmt werden müssen.

Aus der GB 2 306 463 A1 ist ein Verfahren zur Dekontamination von Schwimmbadwasser nach dem Oberbegriff des Anspruchs 1 bekannt, bei welchem das Schwimmbadwasser umgewälzt und in einer Filtrationsanlage von groben Verunreinigungen befreit wird. Ein Teilstrom des umgewälzten Badewassers wird nach der Filtration abgezogen und zum Abbau organischer Verunreinigungen mit Ozon beaufschlagt. Anschließend wird der Teilstrom einer Ozonkontaktkammer zugeführt, in welcher die Oxidation der Verunreinigungen erfolgt, und dann wieder dem Hauptstrom des Schwimmbadwassers zugemischt. Zur Beschleunigung der Oxidation in der Ozonkontaktkammer wird das ozonisierte Wasser mit UV-Strahlung beaufschlagt. Da die UV-Strahlung das Ozon schnell abbaut, wird das Ozon im Wesentlichen zerstört, bevor das mit Ozon behandelte Wasser wieder in das Schwimmbad eintritt. Eine Überprüfung des Ozongehaltes vor Rückführung des behandelten Teilstromes in den Hauptstrom des Schwimmbadwassers erfolgt nicht.

Die DE 38 30 999 A1 beschreibt eine Badewasseraufbereitungsanlage zur Ozonung von Badewasser, bei der aus dem Badebecken entnommenes Badewasser über ein Hauptstromsystem zurück ins Badebecken geführt wird und bei der in dem Hauptstromsystem ein Speicher angeordnet ist. Zur Einbringung von Ozon ist ein Nebenstromsystem vorgesehen, bei dem Wasser an einer ersten Stelle aus dem Speicher entnommen und an einer zweiten Stelle in den Speicher zurückgeführt wird. In dem Nebenstromsystem wird ozonhaltiges Gas aus einer Ozonanlage in das im Nebenstromkreislauf geführte Wasser eingebracht, wobei den Ozon-Injektoren im Nebenstromsystem ein UV-Brenner vorgeschaltet ist, um die im Wasser enthaltenen Ammoniakverbindunaen für die anschließende Reaktion mit dem zugeführten Ozon bzw. dem nascierenden Sauerstoff vorzubereiten.

Die Einbringung des Ozons über die Injektoren wird über eine Redoxsonde im Nebenstromsystem erfasst und in Abhängigkeit von der Wasserbelastung geregelt, wobei im Nebenstromsystem ein bestimmter Redoxbereich eingehalten wird. Bei der Redoxpotentialmessung wird jedoch Chlor automatisch miterfasst, so dass keine eindeutige Erfassung des Ozongehaltes im Nebenstromsystem möglich ist. Dem Speicher, in den der ozonierte Nebenstrom zurückgeführt wird, ist ein Mehrschichtfilter nachgeschaltet, der zur Erniedrigung der Ozonkonzentration auf einen vorgeschriebenen Restkonzentrationswert dient. Dies führt aber neben den zusätzlichen Anlageinvestitionen zu einer unerwünschten Chloridbildung.

Ähnliches gilt für ein aus der DE 196 45 548 A1 bekanntes Ozonisierungsverfahren für Trinkwasser, bei welchem ein Teil des zu behandelnden Hauptwasserstromes abgezweigt und mit Ozon angereichert wird, bevor er wieder in den Hauptwasserstrom eingespeist wird. Hierbei soll der Ozonzusatz bei konstanter Teilstromwassermenge durch Veränderung des Gasmengenstromes oder der Spannung am Ozoneur eingestellt werden. Führungsgröße ist ein Restgehalt von 0,2 bis 0,4 mg/l Ozon vor den Filteranlagen. Die Filteranlagen befinden sich aber im Hauptstrom der Anlage, wobei der verbleibende Ozongehalt wie bei dem oben beschriebenen Stand der Technik in der anschließenden Aktivkohlefilterung wieder entfernt wird.

Aus der DE 44 45 689 A1 ist eine direkte Messung von Ozon bekannt, wobei der Ozongehalt in von dem gesamtem Wasserstrom durchströmten Reaktionskammern erfolgt. Die Abzweigung eines Teilstroms, der allein mit dem Ozon behandelt wird, ist nicht vorgesehen.

Aufgabe der Erfindung ist es, bei einem Verfahren der eingangs beschriebenen Art eine ausreichende Aufbereitung des Badewassers zu gewährleisten und gleichzeitig einen unerwünschten Chloridanstieg zu vermeiden.

Diese Aufgabe wird mit der Erfindung durch die Merkmale des Anspruchs 1 gelöst.

Auf eine Aktivkornkohlefiltration wird verzichtet, so dass durch die Ozonbehandlung zwar einerseits die im Wasser vorhandenen organischen Verbindungen abgebaut werden, das im Wasser vorhandene Restchlor jedoch nicht zu Chlorid umgewandelt wird. Auch wenn die Teilstromozonierung natürlich nicht die volle Leistung einer Vollozonierungsanlage gewährleisten kann, wird doch ein ausreichender Abbau organischer Stoffe sowie die Abtötung aller Mikoorganismen im Teilstrom gewährleistet. Am Ausgang des Reaktionsbehälters wird der Ozonüberschuss gemessen und durch die Steuerung der Ozondosierung gewährleistet, dass ein festgelegter Restgehalt an Ozon im Teilstrom nicht überschritten wird. Die Messung des Ozongehaltes erfolgt hierbei mit einem ozonselektiven Messverfahren, bei dem Chlor nicht miterfasst wird, bspw. einer potentiostatischen Ozonmessung. Dies ermöglicht eine genau auf den festgestelltem Ozongehalt abgestellte Regelung der Ozonzugabe.

Der Ozonrestgehalt liegt erfindungsgemäß bei etwa 0,2 bis 0,6, insbesondere 0,25 bis 0,5 mg/l. Hierbei wird berücksichtigt, dass der mit Ozon belastete Teilstrom des Wassers in den Hauptstrom eingemischt wird, so dass durch Restreaktion und Verdünnung der Ozongehalt in dem dem Schwimmbecken zugeführten Wasser praktisch gleich Null ist.

Erfindungsgemäß ist femer vorgesehen, dass die Teilstromozonierung auch bei reduziertem Badebetrieb und über Nacht im Wesentlichen unverändert weitergeführt wird. Dadurch wird ausgeglichen, dass durch die Teilstromozonierung um Hauptbadebetrieb keine einer Vollozonierungsanlage entsprechende Leistung erbracht werden kann. Durch das Weiterlaufen der Ozonierung auch bei reduziertem Badebetrieb und Nachtbetrieb können die vorhandenen organischen Verbindungen, gebundenes Chlor und Trihalogenmethane weiter reduziert werden.

Gasförmiges Restozon und Ballastluft werden in Weiterbildung der Erfindung aus dem Reaktionsbehälter über eine Entlüftungsanlage abgeführt und in einem Aktivkohlefilter absorbiert. Dadurch wird sichergestellt, dass die Abluft ozonfrei ist, wobei das Badewasser selbst nicht mit der Aktivkornkohle in Verbindung kommt, so dass eine Chloridbildung aus dem im Wasser enthaltenen Chlor vermieden wird.

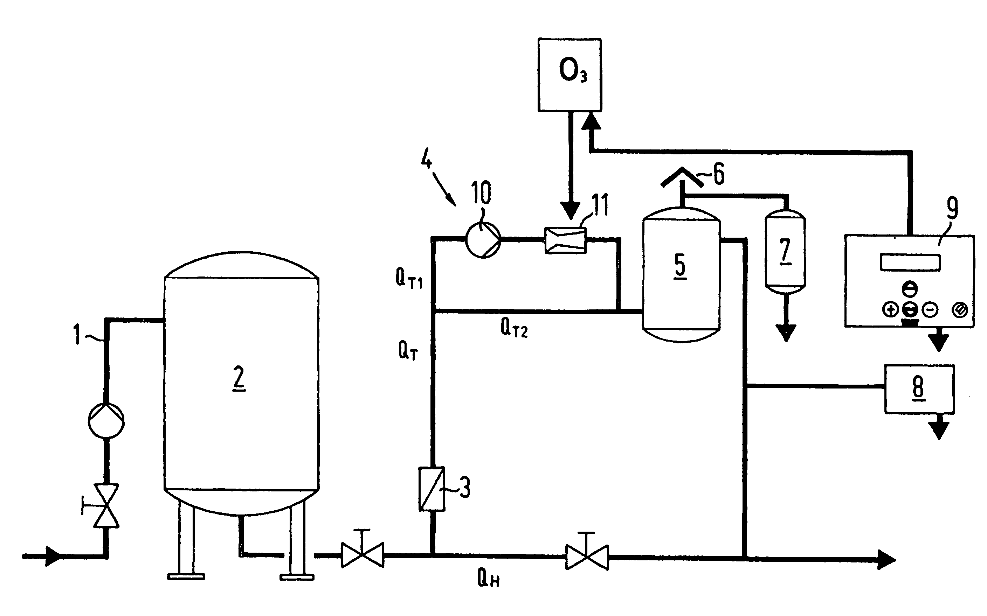

Die Erfindung wird nachfolgend anhand eines Ausführungsbeispiels und der Zeichnung näher beschrieben.

Die einzige Figur zeigt eine schematische Darstellung einer Teilstromozonierungsanlage zur Durchführung des erfindungsgemäßen Verfahrens.

In einem Schwimmbad wird das Badewasser zur Reinigung und Desinfektion ständig umgewälzt. Hierzu wird das Badewasser über eine Umwälzleitung 1 einem Filterbehälter 2 zugeführt, in dem das Wasser im Wesentlichen durch mechanische Filtration von groben Verunreinigungen befreit wird.

Anschließend wird der Wasserstrom über eine Ventileinrichtung 3 in einen Hauptstrom Q_{H} und einen Teilstrom Q_{T} aufgeteilt. Der etwa 80 bis 90% des Gesamtstroms umfassende Hauptstrom Q_{H} bleibt unbehandelt, während der abgezweigte Teilstrom Q_{T} einer Ozonierungsanlage 4 zugeführt wird. Hier wird der Teilstrom Q_{T} nochmals in Unterteilströme Q_{T1} und Q_{T2} aufgeteilt. Der Unterteilstrom Q_{T1} des Badewassers, bspw 1 m³/h wird über eine Druckerhöhungspumpe 10 und einen Injektor 11 geführt, in dem das Ozon (O₃) in das Badewasser eingebracht wird. Der gesamte Teilstrom Q_{T} lässt sich in größeren Bädern nicht über die Druckerhöhungspumpe 10 führen, da die hierfür erforderliche Leistung zu hoch wäre. In kleineren Bädern kann ggf. auf die Aufteilung des Teilstroms Q_{T} verzichtet werden. Nach der Ozoninjektion werden die Unterteilströme Q_{T1} und Q_{T2} wieder zusammengeführt und einem Reaktionsgefäß 5 zugeführt, das von dem mit Ozon beaufschlagten Teilstrom Q_{T} durchströmt wird. Durch entsprechende Auslegung des Reaktionsgefäßes 5 wird eine ausreichende Verweildauer gewährleistet, so dass das Ozon mit in dem Wasser enthaltenen organischen Substanzen in Reaktion treten kann. Über eine automatische Entlüftungsanlage 6 werden gasförmiges Restozon und Ballastluft von dem Reaktionsgefäß 5 abgeführt und einem Aktivkornkohlefilter 7 zugeführt. Hier wird das Ozon absorbiert, so dass die austretende Luft frei von Ozon ist.

Am Ausgang des Reaktionsbehälters 5 wird mit Hilfe eines Messgerätes 8 und eines ozonselektiven Messverfahrens, bei dem Chlor nicht erfasst wird, der Restgehalt von Ozon in dem Teilstrom Q_{T} des Wassers hinter dem Reaktionsgefäß 5 gemessen. Die Messung erfolgt vorzugsweise potentiostatisch. Das Ergebnis der Ozonmessung wird von dem Messgerät 8 an eine Steuerung 9 der Ozonierungsanlage 4 weitergegeben, über die die Ozonzugabe vor dem Reaktionsgefäß 5 geregelt wird. Hierbei wird sichergestellt, dass der Restgehalt des Ozons 0,2 bis 0,6, vorzugsweise 0,25 bis 0,5 mg/l nicht überschreitet.

Der Teilstrom Q_{T} wird anschließend wieder dem Hauptstrom Q_{H} zugemischt, wobei der Restgehalt an Ozon durch Restreaktion und Verdünnung mit/in dem Hauptstrom O_{H} praktisch auf Null reduziert wird.

Durch die erfindungsgemäße Teilstrom-Ozonierung können während des Hauptbadebetriebes nicht die Leistungen einer Vollozonierungsanlage erbracht werden. Daher ist vorgesehen, dass die Teilstromozonierung auch bei reduziertem Badebetrieb und Nachtbetrieb weiterläuft, so dass die vorhandenen organischen Verbindungen, gebundenes Chlor und Trihalogenmethane weiter reduziert werden können.

Mit der Erfindung wird somit eine Möglichkeit geschaffen, organische Substanzen, gebundenes Chlor, Trihalogenmethane etc. wirksam aus dem Schwimmbadwasser zu entfernen und gleichzeitig eine unerwünschte Chloridbildung zu verhindern. Eine Leistungsverringerung durch die Teilstrombehandlung wird dadurch ausgeglichen, **dass** die Ozonierung auch bei reduziertem Badebetrieb und über Nacht weitergeführt wird.

### Bezugszeichenliste

- 1: Umwälzleitung
- 2: Filterbehälter
- 3: Ventileinrichtung
- 4: Ozonierungsanlage
- 5: Reaktionsgefäß
- 6: Entlüftungsanlage
- 7: Aktivkornkohlefilter
- 8: Messgerät
- 9: Steuerung
- 10: Druckerhöhungspumpe
- 11: Injektor

## Patentansprüche

1. Verfahren zur Aufbereitung von Badewasser, insbesondere in Schwimmbadanlagen, bei dem das Badewasser umgewälzt und in einer Filtrationsanlage (2) von groben Verunreinigungen befreit wird, und bei dem dem Badewasser zum Abbau organischer Substanzen, Bakterien etc. Ozon zugesetzt wird, wobei vorzugsweise nach der Filtration ein Teilstrom (Q_{T}) von 8 bis 25% des Badewassers abgezweigt und mit Ozon beaufschlagt wird, wobei der Teilstrom (Q_{T}) einem Reaktionsgefäß (5) zugeführt wird, das eine ausreichende Verweildauer gewährleistet, und wobei der Teilstrom (Q_{T}) dann wieder dem Hauptstrom (Q_{H}) des Badewassers zugemischt wird, **dadurch gekennzeichnet, dass** am Ausgang des Reaktionsbehälters (5) der Ozonüberschuss mit einem ozonselektiven Messverfahren, bei dem Chlor nicht miterfasst wird, gemessen wird und dass durch die Steuerung der Ozondosierung gewährleistet wird, dass ein festgelegter Restgehalt an Ozon im Teilstrom (Q_{T}) nicht überschritten wird.

2. Verfahren nach Anspruch 1, **dadurch gekennzeichnet, dass** 10 bis 20% des Badewassers als Teilstrom (Q_{T}) für die Ozonzugabe abgezweigt werden.

3. Verfahren nach Anspruch 1, **dadurch gekennzeichnet, dass** der Restgehalt des Ozons 0,2 bis 0,6, insbesondere 0,25 bis 0,5 mg/l nicht überschreiten darf.

4. Verfahren nach einem der vorhergehenden Ansprüche, **dadurch gekennzeichnet, dass** die Teilstromozonierung auch bei reduziertem Badebetrieb und über Nacht im Wesentlichen unverändert weitergeführt wird.

5. Verfahren nach einem der vorhergehenden Ansprüche, **dadurch gekennzeichnet, dass** gasförmiges Restozon und Ballastluft aus dem Reaktionsbehälter (5) über eine Entlüftungsanlage (6) abgeführt und in einem Aktivkohlefilter (7) absorbiert werden.

## Claims

1. Method for treating bathing water in particular in swimming pool installations, in which the bathing water is circulated and freed from coarse polluants in a filtering device (2) and in which ozone is added to the bathing water in order to decompose organic substances, bacteria etc., wherein, preferably after filtering, a partial flow (Q_{T}) of 8 to 25 % of the bathing water is diverted and supplied with ozone, wherein the partial flow (Q_{T}) is fed to a reaction vessel (5), which ensures a sufficient retention period, and wherein the partial flow (Q_{T}) is subsequently remixed to the main flow (Q_{H}) of the bathing water, **characterized in that** at the exit of the reaction vessel (5) the excess ozone is measured by an ozone selective measuring method which does not detect chlorine, and **in that** it is ensured by the controlling of the ozone dosage that a fixed residue ozone concentration in the partial flow (Q_{T}) is not exceeded.

2. Method according to claim 1, **characterized in that** 10 to 20 % of the bathing water are diverted as partial flow (Q_{T}) for the addition of ozone.

3. Method according to claim 1, **characterized in that** the remaining ozone concentration may not exceed 0.2 to 0.6, especially 0.25 to 0.5 mg/l.

4. Method according to one of the preceding claims, **characterized in that** the ozonification of the partial flow is essentially continued unaltered also during reduced bathing activity and over night.

5. Method according to one of the preceding claims, **characterized in that** the remaining gaseous ozone and the ballast air are discharged from the reaction vessel (5) via a venting device (6) and absorbed in an activated carbon filter (7).

## Revendications

1. Procédé de traitement des eaux de baignade en particulier dans des installations de piscines, dans lequel les eaux de baignade sont circulées et libérées de polluants grossiers dans une installation de filtrage (2), et dans lequel de l'ozone est ajouté aux eaux de baignade pour décomposer des substances organiques, bactéries etc., un courant partiel (Q_{T}) de 8 à 25 % des eaux de baignade étant écarté et alimenté en ozone de préférence après le filtrage, le courant partiel (Q_{T}) étant amené vers un réacteur (5), qui garantit une durée de séjour suffisante, et le courant partiel (Q_{T}) étant après remélangé au courant principal (Q_{H}) des eaux de baignade, **caractérisé en ce que** l'excès d'ozone est mesuré à la sortie du réacteur (5) avec un procédé de mesure sélectif à l'ozone, qui ne détecte pas le chlore, et **en ce qu'**il est garantit à travers le contrôle du dosage d'ozone qu'une teneur résiduelle en ozone fixe dans le courant partiel (Q_{T}) ne soit pas excédée.

2. Procédé selon la revendication 1, **caractérisé en ce que** 10 à 20 % des eaux de baignade sont écartées sous forme d'un courant partiel (Q_{T}) pour l'addition d'ozone.

3. Procédé selon la revendication 1, **caractérisé en ce que** la teneur résiduelle de l'ozone ne doit pas excéder 0,2 à 0,6, en particulier 0,25 à 0,5 mg/l.

4. Procédé selon une des revendications précédentes, **caractérisé en ce que** l'ozonage du courant partiel est aussi continué essentiellement sans changement durant les périodes de baignade réduite et durant la nuit.

5. Procédé selon une des revendications précédentes, **caractérisé en ce que** l'ozone résiduel gazeux et l'air de ballast sont évacués du réacteur (5) à travers une installation de désaération (6) et absorbés dans un filtre à charbon activé (7).
